# EUROPÄISCHE PATENTSCHRIFT

(11) **EP 1 475 139 B1**
(45) Veröffentlichungstag und Bekanntmachung des Hinweises auf die Patenterteilung: **11.07.2007**
(21) Anmeldenummer: 04009936.8
(22) Anmeldetag: 27.04.2004
(51) Int. Cl.: B01D 46/04

(54) **Reinigungsvorrichtung für ein Bündel rohrförmiger, an einem Ende offen ausgebildeter Filterelemente**
Cleaning apparatus for a group of tubular filter elements, which are open at one end
Dispositif de nettoyage pour un groupe d'éléments de filtration tubulaires, ouvert à une extrémité

(30) Priorität: 08.05.2003 DE 10320486
(43) Veröffentlichungstag der Anmeldung: 10.11.2004
(73) Patentinhaber: Intensiv-Filter GmbH & Co KG, D-42555 Velbert - Langenberg (DE)
(72) Erfinder: Exner, Markus, 42555 Velbert (DE); Kräbs, Rainer, 45549 Spröchhövel (DE)
(74) Vertreter: Christophersen & Partner

(56) Entgegenhaltungen:
- EP-A- 0 357 931
- EP-A- 1 029 576
- US-A- 4 504 293

## Beschreibung

Die Erfindung betrifft eine Reinigungsvorrichtung für ein Bündel rohrförmiger, an einem Ende offen ausgebildeter Filterelemente, vorzugsweise eines industriellen Staubfilters, mit gegenüber den Öffnungen der Filterelemente angeordneten Injektoren zur Abgabe eines impulsartigen Druckluftstrahls in die Filterelemente, wobei die über Ventile gesteuerte Druckluftvorsorgung der Injektoren über mehrere rechtwinklig zu den Injektoren sich erstreckende Düsenrohre erfolgt, und an jedes Düsenrohr in einer Reihe mehrere Injektoren angeschlossen sind.

Derartige Reinigungsvorrichtungen finden vorzugsweise bei industriellen Staubfiltern Verwendung, wie sie zum Beispiel aus der DE 44 40 279 A1 bekannt sind. Filterelemente wie z.B. Filterschläuche, Gewebefilter oder Filterrohre sind über die Fläche eines Trennbodens gleichmäßig verteilt, der den Staubluftraum des Filters von dessen Reinluftraum trennt. Die Filterelemente ragen unter ihrem Eigengewicht in den unten angeordneten Staubluftraum, so daß sie von außen nach innen von der staubhaltigen Luft durchströmt werden. An ihrem oberen Ende sind die Filterelemente offen, so daß sie mit dem oberhalb des Trennbodens angeordneten Reinluftraum in Verbindung steht, welcher gegenüber dem Staubluftraum mit einem geringeren Druck betrieben wird.

Derartige Filterelemente müssen in Abständen gereinigt werden, da sie sich nach einer gewiesen Betriebsdauer von außen her zusetzen. Ein weit verbreitetes Reinigungssystem besteht darin, in Umkehrung der Filtrationsrichtung Druckluft impulsartig von den Öffnungen her in die Filterelemente einzublasen, wodurch der außen haftende Staub bzw. Filterkuchen abplatzen kann, und in eine unterhalb der Filterelemente angeordnete Sammeleinrichtung fällt.

An die Regeneration der Filterflächen werden dann besonders hohe Anforderungen gestellt, wenn das Filter in Produktionsanlagen mit häufig wechselnden Produkten verwendet wird. Bei einem solchen Einsatz des Filters ist es erforderlich, den gesamten Staubluftraum einschließlich der Filterelemente umfassend zu reinigen, damit bei einem Produktwechsel keine Produktverfälschungen oder Produktverunreinigungen eintreten können. Ein solcher hygienegerechter Betrieb ist vor allem bei der Verarbeitung von Lebensmitteln, pharmazeutischen oder medizinischen Produkten unumgänglich.

Zur Erzeugung des Druckluftimpulses sind oberhalb der Filterelemente Injektoren angeordnet. In der Regel werden mehrere, in einer Reihe angeordnete Injektoren über ein gemeinsames Düsenrohr mit der für den Reinigungsvorgang erforderlichen Druckluft versorgt. Das als Verteiler dienende Düsenrohr ist über ein schnell schaltbares Ventil mit einem Druckluftspeicher verbindbar. Durch fast schlagartiges Öffnen des Ventils gelangt Druckluft in das Düsenrohr und über die daran angesetzten Injektoren von oben her in die Filterelemente. Der hiermit verbundene steuerungstechnische Aufwand ist relativ hoch, da zwar an das ventilgesteuerte Düsenrohr mehrere Injektoren angeschlossen und damit gleichzeitig betreibbar sind, jedoch jedes Düsenrohr über ein eigenes Ventil an den Druckspeicher angeschlossen werden muß. Die Möglichkeit, sämtliche der in der Regel parallel zueinander verlaufenden Düsenrohre an ein einziges, gemeinsames Ventil anzuschließen und auf diese Weise den steuerungstechnischen Aufwand zu reduzieren, ist eher theoretischer Natur. In der Praxis zeigt sich, daß auf diese Weise keine gleichmäßig verteilte Impulsstärke in allen Injektoren erreichbar ist. Vielmehr besteht die Gefahr, daß einzelne Injektoren mit höherer, und andere Injektoren mit demgegenüber geringerer Impulsstärke arbeiten, was für eine gleichmäßige Abreinigung eines Filters nicht akzeptabel ist.

Der Erfindung liegt die Aufgabe zugrunde, eine mit geringem steuerungstechnischen Aufwand arbeitende Reinigungsvorrichtung für ein Bündel rohrförmiger, an einem Ende offen ausgebildeter Filterelemente zu schaffen, wobei die Reinigungsvorrichtung mit gleichmäßig verteilter Impulsstärke der Injektoren arbeiten soll.

Zur Lösung dieser Aufgabe wird bei einer Reinigungsvorrichtung mit den eingangs genannten Merkmalen vorgeschlagen, daß nur ein Teil der Düsenrohre unmittelbar an Ventile angeschlossen ist und sich diese Düsenrohre bis zu einer Umlenkung erstrecken, von der aus sich mindestens ein weiteres, an seinem Ende verschlossenes Düsenrohr in umgekehrter Richtung erstreckt.

Erfindungsgemäß lassen sich daher zumindest zwei Düsenrohrstränge mit einem einzigen Ventil betreiben. Dabei hat sich herausgestellt, daß entgegen der Vermutung, daß die strömungstechnische Umlenkung des Druckluftstroms zu einem spürbaren Druckabfall führt, die Injektoren entlang sowohl des Hinstrangs wie auch des an seinem Ende verschlossenen Rückstrangs mit einer gleichmäßig verteilten Impulsstärke arbeiten.

Des weiteren hat sich herausgestellt, daß auch bei Weiterbildung der Umlenkung zu einer Verzweigung mit einem Hinstrang und mehreren Rücksträngen keine Nachteile hinsichtlich der angestrebten gleichmäßig verteilten Impulsstärke der Injektoren eintreten. Mit einer besonders vorteilhaften Ausgestaltung der Erfindung wird daher vorgeschlagen, daß die Umlenkung zugleich eine Verzweigung ist, von der aus sich zwei Düsenrohre in umgekehrter Richtung zu dem unmittelbar an das Ventil angeschlossenen Düsenrohr erstrecken.

Vorzugsweise ist diese Verzweigung symmetrisch derart, daß sich die sich in umgekehrter Richtung erstreckenden Düsenrohre beiderseits des unmittelbar an das Ventil angeschlossenen Düsenrohres befinden. Bei diesem System von Düsenrohren befindet sich daher der Hinstrang zwischen und vorzugsweise mittig zwischen den Rücksträngen.

In einer vorteilhaften konstruktiven Ausgestaltung endet das unmittelbar an das Ventil angeschlossene Düsenrohr in einem T-Stück, von dessen beiden Abzweigungen Rohrbögen zu dem Anfang der sich in umgekehrter Richtung erstreckenden Düsenrohre führen, d.h. der Düsenrohre des Rückstrangs.

Schließlich wird mit einer Ausgestaltung der Reinigungsvorrichtung vorgeschlagen, daß die Querschnitte aller Düsenrohre gleich sind, vorzugsweise auch die Rohrquerschnitte im Bereich der Umlenkung bzw. Verzweigung.

Die Erfindung wird nachfolgend anhand eines Ausführungsbeispiels näher erläutert. In der dazugehörigen Zeichnung zeigen im einzelnen
- Fig. 1: in einer Schnittdarstellung ein industrielles Staubfilter mit einer in seinem oberen Teil angeordneten Reinigungsvorrichtung;
- Fig. 2: eine Draufsicht auf die aus einem Druckluftspeicher, Ventilen und einem System von Düsenrohren zusammengesetzte Reinigungsvorrichtung.

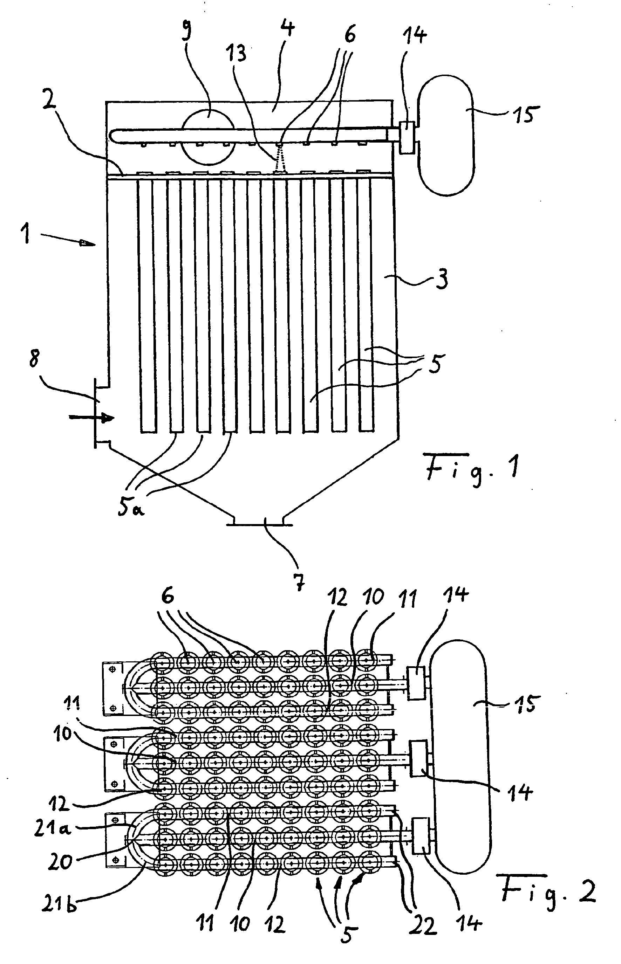

Die Fig. 1 zeigt ein industriell einsetzbares Staubfilter in einer geschnittenen Gesamtdarstellung. Das Staubfilter besteht aus einem vertikal ausgerichteten, vorzugsweise zylindrischen Filtergehäuse (1), welches durch einen horizontal liegenden Trennboden (2) in einen unten liegenden Staubgasraum (3) und einen oben liegenden Reingasraum (4) unterteilt ist. Der Trennboden (2) ist ähnlich einem Rohrboden gestaltet und verfügt über eine Mehrzahl von Öffnungen für darin eingesetzte, langgestreckte Filterelemente (5). Bei den dargestellten Filterelementen handelt es sich um Filterrohre, die an ihrem unteren Ende bei (5a) verschlossen und an ihrem oberen Ende offen sind. Die Filterelemente (5) sind von oben her in die Öffnungen des Trennbodens (2) eingehängt, wobei sie sich auf der Oberseite des Trennbodens abstützen. Die wirksame Filterfläche wird durch die Mantelfläche der vorzugsweise zylindrisch gestalteten Filterelemente (5) gebildet. Jeweils mehrere Filterelemente (5) des Filterrohrbündels können auch so angeordnet werden, daß sie eine Teilgruppe in Gestalt eines ein Filterpakets bilden.

Über einen Eintritt (8) des Filtergehäuses gelangt das staubhaltige Gas in das Filter. Zum Reinigen und damit Regenerieren der einzelnen Filterelemente (5) des Filterrohrbündels befinden sich oberhalb von deren Öffnungen Injektoren (6) eines Druck-Impuls-Injektorsystems. Kurzzeitig wird über die Injektoren (6) ein starker Luftstrahl von oben her in die Öffnungen der Filterelemente (5) abgegeben, so daß die Filterelemente von dem an deren Außenflächen ausfiltrierten Staub oder dem staubhaltigen Produkt gereinigt werden. Der Staub sammelt sich im unteren Teil des Filtergehäuses (1), weshalb dort ein Staubaustrag (7) angeordnet ist. Das gereinigte Gas tritt bei (9) wieder aus.

Die Injektoren (6) befinden sich unten an der Mantelfläche von Düsenrohren (10, 11, 12). In einer einfachsten Ausgestaltung sind hierzu die Düsenrohre (10, 11, 12) mit entsprechenden Öffnungen, d. h. Düsen versehen, welche jeweils exakt auf das darunter angeordnete Filterelement (5) ausgerichtet sind und auf diese Weise als Injektoren dienen. Die Injektoren können aber auch zusätzliche Bauteile sein, die an den Düsenrohren befestigt sind. Auf der Zeichnung ist mit Bezugszeichen (13) ein aus einem Injektor (6) austretender und auf das jeweilige Filterelement gerichteter Druckluftimpuls dargestellt. Über Ventile (14) sind die Düsenrohre (10, 11, 12) mit einem Druckluftspeicher (15) verbindbar. Öffnet das jeweilige Ventil (14), gelangt Druckluft schlagartig über das Düsenrohr zu dessen Injektoren (6).

Figur 2 läßt als Draufsicht auf das System von Düsenrohren erkennen, daß eine Mehrzahl derartiger Düsenrohre (10, 11, 12) vorhanden sind, wobei diese sich vorzugsweise parallel zueinander erstrecken. Jedes der Düsenrohre (10, 11, 12) weist an seiner Unterseite insgesamt neun Injektoröffnungen auf. Auch die Zahl der Düsenrohre (10, 11, 12) beträgt beim Ausführungsbeispiel neun. Dabei sind die Düsenrohre zu insgesamt drei Gruppen zusammengefaßt. Jede Gruppe wiederum besteht einem mittig angeordneten Düsenrohr (10) sowie zwei zu beiden Seiten angeordneten Düsenrohren (11) und (12). Nur das mittige Düsenrohr ist, wie Fig. 2 ferner erkennen läßt, unmittelbar an das jeweilige Ventil (14) der Gruppe angeschlossen. An seinem anderen, in Fig. 2 linken Ende endet das mittig angeordnete Düsenrohr (10) in einem T-Stück (20). Von der einen Abzweigung des T-Stücks (20) führt ein erster Rohrbogen (21 a) im Viertelkreis zu dem Düsenrohr (11), von der anderen Abzweigung des T-Stücks (20) führt ein zweiter Rohrbogen (21 b) im Viertelkreis zu dem Düsenrohr (12). Das T-Stück (20) sowie die beiden Viertelkreis-Bögen (21 a, 21 b) bilden daher insgesamt eine Strömungsumlenkung mit gleichzeitiger Verzweigung. Vom Ende des mittigen Düsenrohres (10) aus gelangt die Druckluft in die beiden anderen Düsenrohre (11, 12), die sich strömungstechnisch daher in umgekehrter Richtung erstrecken, wie das Düsenrohr (10). Die Druckluft strömt daher, nachdem das Ventil (14) freigegeben wurde, in der einen Richtung entlang des mittigen Düsenrohres (10) und in entgegengesetzter Richtung durch die beiden weiteren Düsenrohre (11, 12). An ihren Enden (22) nahe des Ventils (14) sind die beiden weiteren Düsenrohre (11, 12) verschlossen.

Die Querschnitte aller Düsenrohre, d.h. sowohl des Düsenrohres (10) des Hinstrangs, wie auch der Düsenrohre (11, 12) des Rückstrangs sind gleich, was die Produktionskosten senkt und insbesondere die Verbindung der Rohre im Bereich des T-Stücks (20) vereinfacht.

Die drei Ventile (14) lassen sich gemeinsam betätigen oder, was vorteilhafter sein kann, nacheinander. Bei dem dargestellten Ausführungsbeispiel verzweigt sich das unmittelbar an das Ventil (14) angeschlossene Düsenrohr (10) in zwei weitere Düsenrohre (11, 12). Ebenso ist auch eine stärkere Verzweigung möglich, z.B. von einem Düsenrohr des Hinstrangs in insgesamt vier Düsenrohre des Rückstrangs.

### Bezugszeichenliste

- (1): Filtergehäuse
- (2): Trennboden
- (3): Staubgasraum
- (4): Reingasraum
- (5): Filterelement
- (6): Injektor
- (7): Staubaustrag
- (8): Eintritt
- (9): Austritt
- (10): Düsenrohr
- (11): Düsenrohr
- (12): Düsenrohr
- (13): Druckluftimpuls
- (14): Ventil
- (15): Druckluftspeicher
- (20): T-Stück
- (21 a): Rohrbogen
- (21 b): Rohrbogen
- (22): Verschlossenes Ende

## Patentansprüche

1. Reinigungsvorrichtung für ein Bündel rohrförmiger, an einem Ende offen ausgebildeter Filterelemente, vorzugsweise eines industriellen Staubfilters, mit gegenüber den Öffnungen der Filterelemente angeordneten Injektoren (6) zur Abgabe eines impulsartigen Druckluftstrahls in die Filterelemente, wobei die über Ventile (14) gesteuerte Druckluftversorgung der Injektoren (6) über mehrere rechtwinklig zu den Injektoren (6) sich erstreckende Düsenrohre (10, 11, 12) erfolgt, und an jedes Düsenrohr (10, 11, 12) in einer Reihe mehrere Injektoren angeschlossen sind,
**dadurch gekennzeichnet,**
**daß** nur ein Teil der Düsenrohre unmittelbar an Ventile (14) angeschlossen ist und sich diese Düsenrohre (10) bis zu einer Umlenkung (20, 21a, 21b) erstrecken, von der aus sich mindestens ein weiteres, an seinem Ende (22) verschlossenes Düsenrohr (11, 12) in umgekehrter Richtung erstreckt.

2. Reinigungsvorrichtung nach Anspruch 1.
**dadurch gekennzeichnet,**
**daß** die Umlenkung (20, 21a, 21 b) zugleich eine Verzweigung ist, von der aus sich zwei Düsenrohre (11, 12) in umgekehrter Richtung im Vergleich zu dem unmittelbar an ein Ventil (14) angeschlossenen Düsenrohr (10) erstrecken.

3. Reinigungsvorrichtung nach Anspruch 2,
**dadurch gekennzeichnet,**
**daß** die Verzweigung symmetrisch ist derart, daß sich die sich in umgekehrter Richtung erstreckenden Düsenrohre (11, 12) beiderseits des unmittelbar an das Ventil (14) angeschlossenen Düsenrohres (10) befinden.

4. Reinigungsvorrichtung nach Anspruch 3,
**dadurch gekennzeichnet,**
**daß** das unmittelbar an das Ventil (14) angeschlossene Düsenrohr (10) in einem T-Stück (20) endet, von dessen beiden Abzweigungen Rohrbögen (21a, 21b) zu dem Anfang der sich in umgekehrter Richtung erstreckenden Düsenrohre (11,12) führen.

5. Reinigungsvorrichtung nach einem der vorangehenden Ansprüche,
**dadurch gekennzeichnet,**
**daß** die Querschnitte aller Düsenrohre (10, 11,12) gleich sind.

6. Reinigungsvorrichtung nach einem der vorangehenden Ansprüche,
**dadurch gekennzeichnet,**
**daß** die Injektoren (6) Öffnungen in der Mantelfläche der Düsenrohre (10, 11, 12) sind.

## Claims

1. Cleaning device for a bundle of tubular filter elements which are open at one end, preferably of an industrial dust filter, comprising injectors (6) arranged opposite the openings of the filter elements for discharging a pulsed compressed air jet into the filter elements, wherein the compressed air supply to the injectors (6), which is controlled via valves (14), takes place via a plurality of nozzle tubes (10, 11, 12) which extend at right angles to the injectors (6), and a plurality of injectors are connected in a row to each nozzle tube (10, 11, 12), **characterised in that** only some of the nozzle tubes are connected directly to valves (14) and these nozzle tubes (10) extend as far as a deflection (20, 21a, 21b), from which at least one further nozzle tube (11, 12) which is closed at its end (22) extends in the opposite direction.

2. Cleaning device according to claim 1, **characterised in that** the deflection (20, 21a, 21b) is at the same time a branching, from which two nozzle tubes (11, 12) extend in the opposite direction compared to the nozzle tube (10) connected directly to a valve (14).

3. Cleaning device according to claim 2, **characterised in that** the branching is symmetrical, such that the nozzle tubes (11, 12) extending in the opposite direction are located on either side of the nozzle tube (10) connected directly to the valve (14).

4. Cleaning device according to claim 3, **characterised in that** the nozzle tube (10) connected directly to the valve (14) ends in a T-piece (20), from the two branchings of which tube bends (21a, 21b) lead to the start of the nozzle tubes (11, 12) extending in the opposite direction.

5. Cleaning device according to one of the preceding claims, **characterised in that** the cross sections of all the nozzle tubes (10, 11, 12) are the same.

6. Cleaning device according to one of the preceding claims, **characterised in that** the injectors (6) are openings in the outer surface of the nozzle tubes (10, 11, 12).

## Revendications

1. Dispositif de nettoyage pour un groupe d'éléments de filtration tubulaires ouverts à une extrémité, de préférence d'un filtre industriel à poussières, avec des injecteurs (6) placés en vis-à-vis des ouvertures des éléments de filtration afin de délivrer un jet d'air comprimé de type pulsé dans les éléments de filtration, l'alimentation en air comprimé des injecteurs (6), commandée par l'intermédiaire de vannes (14), s'effectuant par l'intermédiaire de plusieurs tubes de buse (10, 11, 12) s'étendant perpendiculairement aux injecteurs (6) et plusieurs injecteurs sont raccordés en une série à chaque tube de buse (10, 11, 12),
**caractérisé en ce que** seulement une partie des tubes de buse est raccordée directement à des vannes (14) et ces tubes de buse (10) s'étendent jusqu'à une déviation (20, 21 a, 21 b) depuis laquelle au moins un autre tube de buse (11, 12) fermé à son extrémité (22) s'étend dans la direction opposée.

2. Dispositif de nettoyage selon la revendication 1, **caractérisé en ce que** la déviation (20, 21 a, 21 b) est en même temps une ramification depuis laquelle deux tubes de buse (11, 12) s'étendent dans la direction opposée par rapport au tube de buse (10) raccordé directement à une vanne (14).

3. Dispositif de nettoyage selon la revendication 2, **caractérisé en ce que** la ramification est symétrique de telle manière que les tubes de buse (11, 12) s'étendant dans la direction opposée se trouvent des deux côtés du tube de buse (10) raccordé directement à la vanne (14).

4. Dispositif de nettoyage selon la revendication 3, **caractérisé en ce que** le tube de buse (10) raccordé directement à la vanne (14) se termine par un élément en T (20), depuis les deux branches duquel des coudes tubulaires (21a, 21b) conduisent au début des tubes de buse (11, 12) s'étendant dans la direction opposée.

5. Dispositif de nettoyage selon l'une des revendications précédentes, **caractérisé en ce que** les sections de tous les tubes de buse (10, 11, 12) sont identiques.

6. Dispositif de nettoyage selon l'une des revendications précédentes, **caractérisé en ce que** les injecteurs (6) sont des ouvertures dans la surface d'enveloppe des tubes de buse (10, 11, 12).
